# EUROPÄISCHE PATENTSCHRIFT

(11) **EP 1 744 901 B1**
(45) Veröffentlichungstag und Bekanntmachung des Hinweises auf die Patenterteilung: **10.10.2007**
(21) Anmeldenummer: 05740610.0
(22) Anmeldetag: 29.04.2005
(51) Int. Cl.: B42D 15/00, G02B 5/30

(54) **SICHERHEITSELEMENT UND VERFAHREN ZU SEINER HERSTELLUNG**
SECURITY ELEMENT AND METHOD FOR PRODUCING SAID ELEMENT
ELEMENT DE SECURITE ET SON PROCEDE DE PRODUCTION

(30) Priorität: 30.04.2004 DE 102004021248
(43) Veröffentlichungstag der Anmeldung: 24.01.2007
(73) Patentinhaber: Giesecke & Devrient GmbH, 81677 München (DE)
(72) Erfinder: HOFFMÜLLER, Winfried, 83646 Bad Tölz (DE); BURCHARD, Theodor, 83703 Gmund (DE)
(74) Vertreter: Zeuner, Stefan
(86) Internationale Anmeldenummer: PCT/EP2005/004666
(87) Internationale Veröffentlichungsnummer: WO 2005/108107

(56) Entgegenhaltungen:
- EP-A- 0 911 758
- EP-A- 1 156 934
- EP-A- 1 327 895
- WO-A-98/52077
- WO-A-20/04009373
- WO-A-20/04029695
- DE-A1- 10 243 650
- US-A1- 2004 067 210

## Beschreibung

Die Erfindung betrifft ein Sicherheitselement zur Absicherung von Wertgegenständen mit einer oder mehreren Flüssigkristallschichten. Die Erfindung betrifft ferner ein Verfahren zum Herstellen eines derartigen Sicherheitselements, eine Sicherheitsanordnung, die neben einem solchen Sicherheitselement ein separates Darstellungselement umfasst, sowie einen Wertgegenstand, der mit einem solchen Sicherheitselement oder einer solchen Sicherheitsanordnung ausgestattet ist.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen.

Vielfach werden als Sicherheitselemente optisch variable Elemente eingesetzt, die dem Betrachter unter unterschiedlichen Betrachtungswinkeln einen unterschiedlichen Bildeindruck, beispielsweise einen unterschiedlichen Farbeindruck vermitteln. Aus der Druckschrift EP 0 435 029 A2 ist ein solches Sicherheitselement mit einer kunststoffähnlichen Schicht aus einem Flüssigkristallpolymer bekannt, die bei Zimmertemperatur ein ausgeprägtes Farbwechselspiel zeigt. Die optisch variablen Effekte der Flüssigkristallpolymere lassen sich durch Einfärben beliebiger Schichten mit herkömmlichen Farben kombinieren, wodurch sich Muster erzeugen lassen, die erst beim Verkippen der Sicherheitselemente sichtbar werden. Die Farbstoffe selbst können in einer beliebigen Schicht eingebracht oder als Druckbild aufgebracht sein.

Aus der Druckschrift EP 1 156 934 B1 ist ein Sicherheitselement mit einer Flüssigkristallschicht als optisch variablem Material bekannt. Es wird ein Ausführungsbeispiel mit passerhaltiger Anordnung von Druckschichten aus rechtsdrehendem und linksdrehendem flüssigkristallinem Material beschrieben, die bei normaler Beleuchtung das gleiche Erscheinungsbild zeigen, so dass eine durch die Form bzw. den Umriss der Bereiche dargestellte information nicht erkannt werden kann. Erst bei Betrachtung der Schichten durch einen geeigneten Polarisationsfilter kann die Information durch den Helligkeitsunterschied zwischen den Druckschichten erkannt werden. Um diesen Effekt zu erzielen, ist allerdings eine passergenaue Aufbringung der flüssigkristallinen Schichten erforderlich. Die flüssigkristallinen Materialien können zusätzlich mit einem lumineszierenden Merkmalstoff als maschinell prüfbarem Merkmalsstoff versehen sein. Um die optisch variablen Effekte nicht zu beeinträchtigen, werden dabei bevorzugt Lumineszenzstoffe verwendet, die außerhalb des sichtbaren Spektralbereichs emittieren.

Aus der Druckschrift WO-A-98/52077 ist ein Sicherheitselement zur Absicherung von Wertgegenständen entnehmbar, wobei das Sicherheitselement folgende Schichten umfasst: - eine erste lichtpolarisierende Schicht aus einem cholesterischen flüssigkristallinen Material, die Licht mit einer vorbestimmten zirkularen Polarisation selektiv reflektiert, und - eine zweite lichtpolarisierende Schicht, die Licht mit der zur vorbestimmten zirkularen Polarisation gegenläufigen zirkularen Polarisation selektiv reflektiert Die WO-A-98/52077 enthält in anderen Ausgestaltungen auch Sicherheitselemente, die jeweils linear lichtpolarisierende Schichten umfassen, und bei denen orientierbare fluoreszierenden Farbstoffe, die entweder anisotrop fluoreszieren und/oder Licht anisotrop absorbieren, in eine linear lichtpolarisierende Schicht eingebracht sind.

Der Farbkippeffekt der Flüssigkristallschichten führt bei den beschriebenen Sicherheitselementen aufgrund der physikalischen Gegebenheiten bei einer Verkippung aus der Senkrechten heraus stets zu einer Verschiebung der reflektierten Lichtwellenlänge vom längerwelligen Bereich zu einem kürzerwelligen Bereich. Die Möglichkeiten zur Erzeugung unterschiedlicher Farbkippeffekte sind daher begrenzt. Darüber hinaus ist die Betrachtung der Sicherheitselemente nur im Auflicht möglich, da die Farbeffekte wegen des dunklen oder schwarzen Hintergrunds im Durchlicht nicht sichtbar sind.

Ausgehend davon liegt der Erfindung die Aufgabe zugrunde, ein Sicherheitselement der eingangs genannten Art mit hoher Fälschungssicherheit anzugeben, das die Nachteile des Standes der Technik vermeidet.

Diese Aufgabe wird durch das Sicherheitselement mit den Merkmalen des Hauptanspruchs gelöst. Ein Verfahren zu seiner Herstellung, eine Sicherheitsanordnung und ein Wertgegenstand mit einem solchen Sicherheitselement sind in den nebengeordneten Ansprüchen angegeben. Weiterbildungen der Erfindung sind Gegenstand der Unteransprüche.

Die Erfindung stellt ein Sicherheitselement zur Absicherung von Wertgegenständen bereit, das eine erste lichtpolarisierende Schicht aus einem cholesterischen flüssigkristallinen Material enthält, die Licht mit einer vorbestimmten zirkularen Polarisation selektiv reflektiert, und die in eine erste Reflexionsrichtung Licht eines ersten Wellenlängenbereichs und in eine zweite, unterschiedliche Reflexionsrichtung Licht eines zweiten Wellenlängenbereichs selektiv reflektiert. Das Sicherheitselement enthält weiter eine zweite lichtpolarisierende Schicht, die Licht mit der zur vorbestimmten zirkularen Polarisation gegenläufigen zirkularen Polarisation selektiv reflektiert, und die in die erste bzw. zweite Reflexionsrichtung Licht des ersten bzw. zweiten Wellenlängenbereichs selektiv reflektiert, sowie eine zumindest bereichsweise vorliegende Lumineszenzschicht, auf der die erste und zweite lichtpolarisierende Schicht übereinander angeordnet sind. Die Lumineszenzschicht emittiert dabei nach Anregung mit einer außerhalb des sichtbaren Spektralbereichs liegenden Anregungsstrahlung in dem ersten und/oder zweiten Wellenlängenbereich.

Durch eine solche Gestaltung lassen sich neuartige Flüssigkristalleffekte mit erhöhter Fälschungssicherheit erzielen. Wie nachfolgend im Detail erläutert, erlaubt die Filterwirkung der Schichtstruktur aus zwei oder drei aufeinander abgestimmten Flüssigkristallschichten die Erzeugung inverser Farbkippeffekte, bei denen der Farbeindruck des Sicherheitselements beim Kippen aus der Senkrechten, im Gegensatz zu üblichen Farbkippelementen, vom kurzwelligen zu einem längerwelligen Farbeindruck wechselt. In Zusammenspiel mit der ebenfalls vorgesehenen Lumineszenzschicht lassen sich über die Wahl geeigneter Lumineszenzstoffe neue, optisch ansprechende und dabei fälschungssichere und leicht überprüfbare Lumineszenz-Farbkippeffekte verwirklichen.

In einer ersten vorteilhaften Erfindungsvariante ist die zweite lichtpolarisierende Schicht, die Licht mit der zur vorbestimmten zirkularen Polarisation gegenläufigen zirkularen Polarisation selektiv reflektiert, aus einem cholesterischen flüssigkristallinen Material gebildet.

Alternativ kann die zweite lichtpolarisierende Schicht aus zwei Teilschichten gebildet sein, wobei eine erste Teilschicht aus einem cholesterischen flüssigkristallinen Material gebildet ist und Licht mit der vorbestimmten zirkularen Polarisation selektiv reflektiert, und wobei eine zweite Teilschicht, die zwischen der ersten Teilschicht und der ersten lichtpolarisierenden Schicht angeordnet ist, eine λ/2-Schicht bildet. Die λ/2-Schicht ist dabei vorzugsweise aus einem nematischen flüssigkristallinen Material gebildet, das aufgrund der optischen Anisotropie der ausgerichteten stäbchenförmigen Flüssigkristalle die Herstellung optisch aktiver Schichten ermöglicht.

Um den Effekt der λ/2-Schicht gebietsweise abzuschwächen und/oder neue Effekte zu erzeugen, kann die λ/2-Schicht auch aus mehreren übereinander angeordneten und bereichsweise gegeneinander in der Schichtebene verdrehten Teilschichten gebildet sein. Besonders vorteilhaft sind die Teilschichten dabei durch zwei λ/4-Schichten gebildet. Durch eine bereichsweise unterschiedliche Verdrehung der beiden λ/4-Teilschichten lässt sich ihr Einfluss auf zirkular polarisiertes Licht gezielt einsetzen, um beispielsweise codierte Halbtonbilder zu erzeugen.

Die erste und zweite lichtpolarisierende Schicht reflektieren in einer bevorzugten Ausgestaltung in beide Reflexionsrichtungen Licht aus dem sichtbaren Spektralbereich. In anderen, ebenfalls vorteilhaften Ausgestaltungen reflektieren die beiden lichtpolarisierenden Schichten in die erste oder zweite Reflexionsrichtung Licht aus dem nicht sichtbaren Spektralbereich, insbesondere Infrarot- oder Ultraviolettstrahlung. Die Reflexion im nicht sichtbaren Spektralbereich kann beispielsweise für maschinell lesbare Echtheitsmerkmale eingesetzt werden, oder für Farbkippeffekte, bei denen ein sichtbarer Farbeindruck beim Kippen erscheint oder verschwindet.

Die erste und zweite Reflexionsrichtung können beliebig gewählt werden. Um die verschiedenen Farbeindrücke der beiden Wellenlängenbereiche visuell gut trennen zu können, sind die erste und zweite Reflexionsrichtung, bezogen auf eine Flächennormale auf die lichtpolarisierenden Schichten, vorzugsweise durch einen Polwinkel von 20° oder mehr, besonders bevorzugt von 40° oder mehr, getrennt. Beispielsweise kann die erste Reflexionsrichtung parallel zur Flächennormalen sein (Polwinkel θ = 0°) und die zweite Reflexionsrichtung einen Winkel von 45° mit der ersten Reflexionsrichtung einschließen (Polwinkel θ = 45°).

In allen Ausgestaltungen können die verschiedenen Schichten der Sicherheitselemente in Form von Zeichen und/oder Mustern vorliegen. Auch können weitere Schichten aus nematischem und/oder cholesterischem flüssigkristallinem Material vorgesehen sein. Zumindest eine der lichtpolarisierenden Schichten aus cholesterischem flüssigkristallinem Material und/oder gegebenenfalls zumindest eine Schicht aus nematischem flüssigkristallinem Material liegt zweckmäßig in Form von Pigmenten vor, welche in eine Bindemittelmatrix eingebettet sind. Solche Pigmente sind einfacher zu drucken als Flüssigkristalle aus Lösung und stellen keine so hohen Anforderungen an die Glätte des Untergrunds. Darüber hinaus benötigen die pigmentbasierten Druckfarben keine die Ausrichtung fördernden Maßnahmen.

Die erste und zweite lichtpolarisierende Schicht, die Licht gegenläufiger zirkularer Polarisation selektiv reflektieren, können in einer vorteilhaften Ausgestaltung beide aus cholesterischem flüssigkristallinem Mateial gebildet sein und in Form von Pigmenten vorliegen. Eine Mischung gleicher Anteile von Pigmenten der ersten und zweiten lichtpolarisierenden Schicht ist dabei zweckmäßig in eine Bindemittelmatrix eingebettet. Dadurch lassen sich die erste und zweite polarisierende Schicht, die zusammen einen Bandsperrfilter bilden, in einem Druckvorgang als eine Schicht aufbringen.

Die Lumineszenzschicht weist bevorzugt einen oder mehrere unterschiedliche Lumineszenzstoffe, insbesondere fluoreszierende Farbstoffe oder Pigmente auf. In einer vorteilhaften Ausgestaltung kann vorgesehen sein, dass die Lumineszenzschicht zumindest zwei fluoreszierende Farbstoffe oder Pigmente aufweist, die nach Anregung in dem ersten bzw. dem zweiten Wellenlängenbereich emittieren. In einer zweckmäßigen Ausgestaltung weist das Emissionsspektrum der Lumineszenzschicht nach Anregung mit einer Anregungsstrahlung außerhalb des sichtbaren Spektralbereichs in dem ersten und/oder dem zweiten Wellenlängenbereich ein Maximum auf.

In einer weiteren vorteilhaften Ausgestaltung weist die Lumineszenzschicht einen sichtbares Licht zumindest teilweise absorbierenden Absorptionsstoff auf. Insbesondere kann der Absorptionsstoff in Form eines oder mehrerer Farbstoffe oder Pigmente vorliegen und die Lumineszenzschicht entsprechend gefärbt oder pigmentiert sein. Beispielsweise kann die Lumineszenzschicht Rußpartikel als Absorptionsstoff enthalten.

Die lichtpolarisierenden Schichten und die Lumineszenzschicht sind vorzugsweise auf einer transparenten, semitransparenten oder zumindest teilweise dunklen, insbesondere schwarzen Untergrundschicht angeordnet. Dabei bezeichnet im Rahmen der vorliegenden Beschreibung der Begriff "Transparenz" die volle Durchsichtigkeit eines Materials, "semitransparent" oder "transluzent" bedeutet durchscheinend im Sinne einer gewissen Lichtdurchlässigkeit, wobei jedoch anders als bei transparenten Materialien hinter semitransparenten Materialien befindliche Objekte nur diffus oder gar nicht erkennbar sind. Eine semitransparente Untergrundschicht weist insbesondere eine Lichtdurchlässigkeit von unter 90%, zumeist zwischen 80% und 20% auf.

Die Untergrundschicht kann selbst in Form von Zeichen und/oder Mustern vorliegen. Eine dunkle, insbesondere schwarze Untergrundschicht kann gedruckt, durch Einfärben eines Substrats oder durch Einwirkung eines Laserstrahls auf ein Substrat erzeugt sein. Eine semitransparente Untergrundschicht wird in einer bevorzugten Ausgestaltung aus einer mit Pigmenten, insbesondere mit Rußpigmenten versetzten oder einer mit Farbstoffen eingefärbten Lackschicht gebildet.

Die lichtpolarisierenden Schichten, die Lumineszenzschicht und gegebenenfalls die dunkle Untergrundschicht liegen zweckmäßig auf einem Substrat vor, das mit Vorteil aus Papier oder Kunststoff gebildet ist. Zwischen den lichtpolarisierenden Schichten, der Lumineszenzschicht, und gegebenenfalls der dunklen Untergrundschicht können zur Ausrichtung von flüssigkristallinen Schichten bestimmte Ausrichtungs- bzw. Alignmentschichten und/oder Klebeschichten vorliegen.

In vorteilhaften Ausgestaltungen bildet das Sicherheitselement einen Sicherheitsfaden, ein Etikett oder ein Transferelement.

Die Erfindung umfasst auch ein Verfahren zum Herstellen eines Sicherheitselements der beschriebenen Art, bei dem auf einer Lumineszenzschicht übereinander eine erste lichtpolarisierende Schicht aus einem cholesterischen flüssigkristallinen Material und eine zweite lichtpolarisierende Schicht, die zumindest eine (Teil-)Schicht aus einem cholesterischen flüssigkristallinen Material enthält, angeordnet werden. Eine oder mehrere der Flüssigkristallschichten werden dabei mit Vorteil auf eine Trägerfolie aufgebracht, insbesondere aufgedruckt. Werden verschiedene Flüssigkristallschichten auf separaten Trägerfolien aufgebracht, so können sie nach dem Aufbringen auf die Trägerfolie jeweils auf Eignung zur Weiterverarbeitung geprüft und gegebenenfalls ausgesondert werden. Alternativ können zwei oder mehr Flüssigkristallschichten übereinander auf derselben Trägerfolie aufgebracht werden.

Das flüssigkristalline Material kann aus einem Lösungsmittel oder aus der Schmelze aufgebracht werden. Ferner kann insbesondere cholesterisches flüssigkristallines Material in pastöser Form als UV-härtbare cholesterische Mischung aufgebracht werden, wobei ein solches System weder typische Lösungsmittel einschließt, noch auf einer Schmelze oder Pigmenten basiert, sondern stattdessen weitere UV-härtbare Lacke enthält. Je nach angewandtem Verfahren wird das flüssigkristalline Material anschließend zur Entfernung des Lösungsmittels physikalisch getrocknet, ausgerichtet und gehärtet. Die Ausrichtung kann direkt über die Trägerfolie oder über so genannte Alignmentschichten, durch Ausübung von Scherkräften, mithilfe elektrostatischer Methoden usw. erfolgen. Zur Härtung des flüssigkristallinen Materials kann dieses vernetzt werden, beispielsweise mittels ultravioletter Strahlung oder mittels Elektronenstrahl (ESH). Das flüssigkristalline Material kann aber auch durch Zugabe bestimmter Additive fixiert werden

In einer zweckmäßigen Ausgestaltung des Verfahrens werden die auf einer Trägerfolie vorliegenden Flüssigkristallschichten auf die Lumineszenzschicht oder eine weitere Flüssigkristallschicht auflaminiert. Die Trägerfolie kann nach dem Auflaminieren entfernt werden, insbesondere über Trennschichten oder durch Verwendung eines Laminierklebstoffes, dessen Haftung zur Trägerfolie geringer ist als seine Haftung zur Flüssigkristallschicht. Diese Anforderungen an den Laminierklebstoff sind insbesondere dann von Bedeutung, wenn die zu übertragende Flüssigkristallschicht nicht vollflächig ausgebildet ist.

Alternativ kann auf die auf der Trägerfolie vorliegende Flüssigkristallschicht eine vollflächige Hilfsschicht aufgebracht werden, deren Haftung zur Trägerfolie geringer ist als ihre Haftung in Bezug auf die Flüssigkristallschicht, um die Trennung zu ermöglichen. Dadurch lässt sich der Laminierklebstoff vollflächig aufbringen, wobei gleichzeitig unkontrolliertes Verkleben verhindert wird. Die Hilfsschicht ist dabei mit Vorteil eine UV-Lackschicht.

Die Lumineszenzschicht wird vorteilhaft auf eine transparente, semitransparente oder zumindest teilweise dunkle, insbesondere schwarze Untergrundschicht aufgebracht, und wird insbesondere mit einer fluoreszierenden Druckfarbe auf die Untergrundschicht aufgedruckt.

Die Ausbildung der cholesterischen Flüssigkristallschichten kann mit Vorteil durch Kombination eines nematischen Flüssigkristallsystems mit einem Verdriller geschehen. Dabei können die beiden cholesterischen Flüssigkristallschichten durch Kombination eines nematischen Flüssigkristallsystems mit aufeinander abgestimmten ersten und zweiten Verdrillern gebildet werden, so dass sich die Flüssigkristalle der ersten und zweiten Schicht in zueinander spiegelbildlichen Helixstrukturen anordnen.

Die λ/2-Teilschicht der aus zwei Teilschichten gebildeten zweiten lichtpolarisierenden Schicht wird zweckmäßig aus einem nematischen flüssigkristallinen Material gebildet.

Die Erfindung enthält ferner eine Sicherheitsanordnung für Sicherheitspapiere, Wertgegenstände und dergleichen mit einem Sicherheitselement der beschriebenen Art oder einem nach dem beschriebenen Verfahren herstellbaren Sicherheitselement sowie einem separaten Darstellungselement, das in Zusammenwirkung mit dem Sicherheitselement einen Farbkippeffekt für den Betrachter erkennbar macht. In einer bevorzugten Ausgestaltung ist das Sicherheitselement dabei ohne Untergrundschicht, oder mit einer transparenten oder semitransparenten Untergrundschicht ausgebildet, während das separate Darstellungselement einen dunklen, vorzugsweise schwarzen Untergrund umfasst.

Die Erfindung umfasst weiter einen Wertgegenstand, wie einen Markenartikel, ein Wertdokument oder dergleichen, mit einem Sicherheitselement oder einer Sicherheitsanordnung der beschriebenen Art. Das Sicherheitselement ist dabei mit Vorteil in einem Fensterbereich des Wertgegenstands angeordnet. Besonders bevorzugt ist ein flexibler Wertgegenstand, bei dem das Sicherheitselement und das Darstellungselement durch Biegen oder Falten des Wertgegenstands zur Selbstauthentifizierung übereinander gelegt werden können. Der Wertgegenstand kann insbesondere ein Sicherheitspapier, ein Wertdokument oder eine Produktverpackung sein.

Wertgegenstände im Sinne der vorliegenden Erfindung sind insbesondere Banknoten, Aktien, Ausweise, Kreditkarten, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertgegenstand" schließt im Folgenden alle derartigen Gegenstände, Dokumente und Produktsicherungsmittel ein. Unter dem Begriff "Sicherheitspapier" wird die noch nicht umlauffähige Vorstufe zu einem Wertdokument verstanden, die neben dem Sicherheitselement weitere Echtheitsmerkmale aufweisen kann. Sicherheitspapier liegt üblicherweise in quasi endloser Form vor und wird zu einem späteren Zeitpunkt weiterverarbeitet.

Bei einem Verfahren zur Echtheitsprüfung eines Sicherheitselements, einer Sicherheitsanordnung oder eines Wertgegenstands der oben beschriebenen Art wird die Lumineszenzschicht des Elements mit Anregungsstrahlung außerhalb des sichtbaren Spektralbereichs beaufschlagt und das Vorliegen eines vorbestimmten Farbkippeffekts geprüft. Die Erfassung des von dem Sicherheitselement reflektierten Licht kann insbesondere auch maschinell, z.B. mittels geeigneter Sensoren, erfolgen. Die Echtheit des geprüften Elements wird dann auf Grundlage des Prüfungsergebnisses beurteilt.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem eingebetteten Sicherheitsfaden und einem aufgeklebten Transferelement, jeweils nach einem Ausführungsbeispiel der Erfindung,
- Fig. 2: den allgemeinen Schichtaufbau eines erfindungsgemäßen Sicherheitselements im Querschnitt,
- Fig. 3: eine Prinzipskizze eines Bandsperrfilters aus zwei cholesterischen Flüssigkristallschichten,
- Fig. 4: ein Sicherheitselement nach einem Ausführungsbeispiel der Erfindung im Querschnitt,
- Fig. 5: in (a) den Querschnitt eines Sicherheitselements nach einem anderen Ausführungsbeispiel der Erfindung, in (b) eine Ansicht dieses Sicherheitselements bei senkrechter Betrachtung und in (c) eine Ansicht bei spitzwinkliger Betrachtung,
- Fig. 6: ein Sicherheitselement nach einem weiteren Ausführungsbeispiel der Erfindung, bei dem eine der cholesterischen Flüssigkristallschichten durch eine Kombination aus einer λ/2-Schicht und einer gegenläufigen cholesterischen Flüssigkristallschicht ersetzt ist,
- Fig. 7: ein Sicherheitselement mit umgekehrtem FluoreszenzFarbkippeffekt nach noch einem weiteren Ausführungsbeispiel der Erfindung,
- Fig. 8: ein Sicherheitsfaden mit umgekehrtem FluoreszenzFarbkippeffekt nach einem Ausführungsbeispiel der Erfindung, und
- Fig. 9: in (a) eine schematische Darstellung einer Banknote mit einer erfindungsgemäßen Sicherheitsanordnung aus einem Sicherheitselement und einem Darstellungselement, und in (b) eine Aufsicht auf die gefaltete Banknote von (a) mit einer durch das Aufeinanderlegen der beiden Elemente sichtbar gemachten Bildinformation.

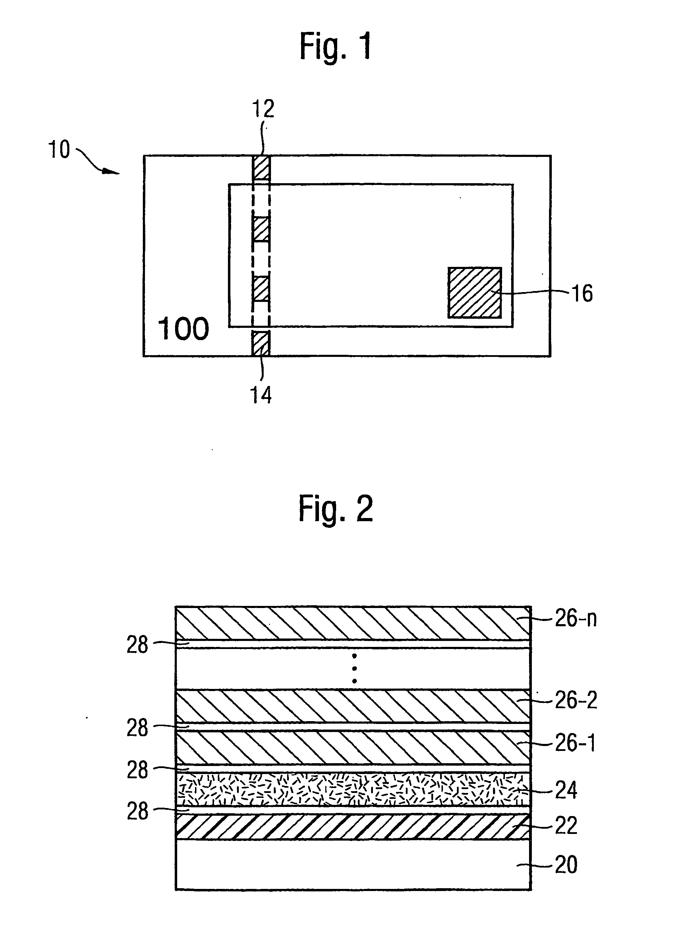

Die Erfindung wird nun am Beispiel einer Banknote näher erläutert. Fig. 1 zeigt eine schematische Darstellung einer Banknote 10, die zwei Sicherheitselemente 12 bzw. 16 aufweist, die jeweils nach einem Ausführungsbeispiel der Erfindung gebildet sind. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet.

Fig. 2 zeigt den prinzipiellen Schichtaufbau der Sicherheitselemente 12 und 16 im Querschnitt. Ein Träger 20, beispielsweise eine glatte PET-Folie guter Oberflächenqualität, ist mit einer Untergrundschicht 22 versehen, die je nach Anwendungsbereich transparent, semitransparent, oder dunkel und absorbierend ausgebildet sein kann. Auf die Untergrundschicht 22 ist eine Fluoreszenzschicht 24 aufgebracht, die nach Anregung im nicht sichtbaren Spektralbereich in einem oder mehreren Wellenlängenbereichen emittiert. Ist das Sicherheitselement beispielsweise in einem Fensterbereich der Banknote 10 vorgesehen, ist eine Anregung der Fluoreszenzschicht, wenn der Träger 20 und die Untergrundschicht 22 zumindest im relevanten nicht sichtbaren, insbesondere ultravioletten Spektralbereich durchlässig sind, von beiden Seiten möglich.

Auf die Fluoreszenzschicht 24 sind zwei oder mehrere, im allgemeinen Fall n lichtpolarisierende Schichten 26-1, 26-2, ... 26-n aus flüssigkristallinem Material aufgebracht, die in verschiedenen Ausführungsformen jeweils unterschiedliche oder auch teilweise die gleichen lichtpolarisierenden Eigenschaften aufweisen können.

Zwischen zwei benachbarten Schichten, bzw. zwischen der Untergrundschicht 22 und dem Träger 20 können Alignmentschichten und/oder Klebeschichten 28 vorgesehen sein, die der Ausrichtung der Flüssigkristalle in den Flüssigkristallschichten bzw. der Verbindung der einzelnen Schichten und dem Ausgleich von Unebenheiten des Untergrunds dienen.

Zwei der flüssigkristallinen Schichten 26-1, 26-2, ... 26-n bestehen erfindungsgemäß aus einem cholesterischen flüssigkristallinen Material und reflektieren jeweils selektiv Licht mit einer vorbestimmten zirkularen Polarisation. Dabei reflektieren sie in eine erste Reflexionsrichtung selektiv Licht eines ersten Wellenlängenbereichs und in eine zweite, unterschiedliche Reflexionsrichtung selektiv Licht eines zweiten Wellenlängenbereichs. In den nachfolgenden Ausführungsbeispielen wird stets angenommen, dass die flüssigkristallinen Schichten bei senkrechtem Lichteinfall grünes Licht und bei spitzwinkligem Lichteinfall blaues Licht reflektieren. Es versteht sich, dass diese Farbwahl nur der Illustration dient und dass im Rahmen der Erfindung selbstverständlich auch Flüssigkristallschichten mit anderen Farbcharakteristiken verwendet werden können.

Die zirkularen Polarisationsrichtungen des von den beiden cholesterischen Flüssigkristallschichten reflektierten Lichts können gegenläufig oder gleichläufig sein. Im letzteren Fall ist zwischen den beiden cholesterischen Flüssigkristallschichten eine λ/2-Schicht vorgesehen, die im relevanten Wellenlängenbereich die Polarisationsrichtung des zirkular polarisierten Lichts gerade umkehrt. Insgesamt reflektiert die Schichtenfolge aus den beiden cholesterischen Flüssigkristallschichten und gegebenenfalls der dazwischen liegenden λ/2-Schicht somit Licht aller beider zirkularer Polarisationsrichtungen und wirkt daher in Transmission als Bandsperrfilter für den jeweiligen Wellenlängenbereich.

Die Untergrundschicht 22 kann in manchen Ausführungsformen der Erfindung auch fehlen. Die Fluoreszenzschicht 24 und die Flüssigkristallschichten 26-1, 26-2, ... 26-n und eventuelle Alignment- und Klebeschichten 28 sind dann direkt auf dem Träger 20 aufgebracht. In manchen Ausgestaltungen, beispielsweise bei Transferelementen, wird der Träger nach dem Aufbringen des fertigen Sicherheitselements auf einen Wertgegenstand oder einen anderen Bestimmungsgegenstand entfernt.

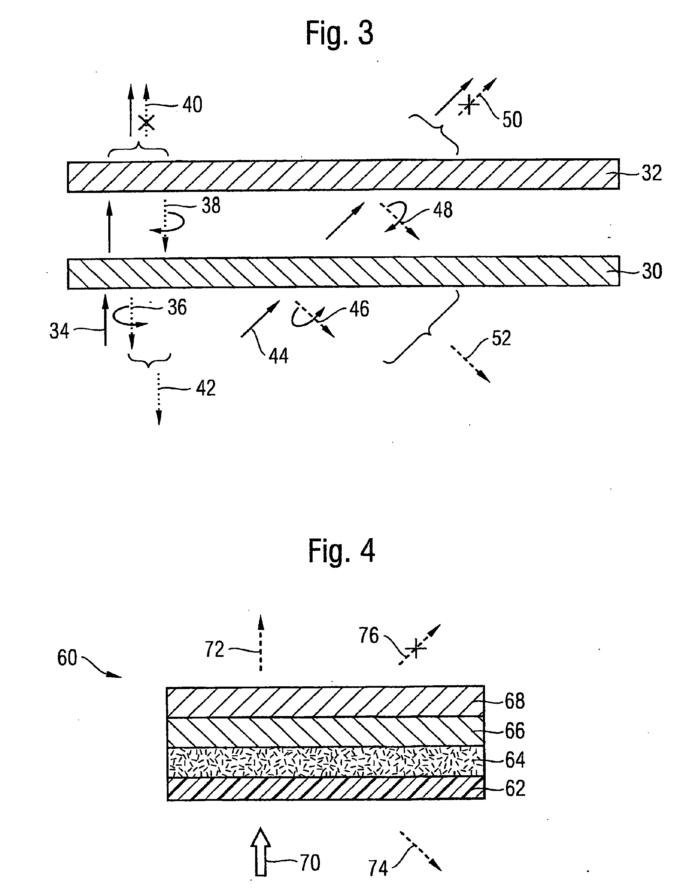

Das Prinzip eines durch zwei cholesterische Flüssigkristallschichten gebildeten Bandsperrfilters, auf dem die nachfolgend beschriebenen Ausführungsbeispiele aufbauen, wird nun anhand der Darstellung der Fig. 3 näher erläutert.

Fig. 3 zeigt zwei übereinander liegende cholesterische Flüssigkristallschichten 30 und 32, die zur Illustration der transmittierten und reflektierten Lichtstrahlen voneinander beabstandet dargestellt sind. Die beiden Flüssigkristallschichten 30 und 32 sind so ausgebildet, dass sie dasselbe selektive Farbreflexionsspektrum aufweisen, und beispielsweise in die senkrechte Reflexionsrichtung grünes Licht und in eine spitzwinklige Reflexionsrichtung blaues Licht reflektieren. Die beiden Flüssigkristallschichten 30 und 32 unterscheiden sich allerdings in der zirkularen Polarisationsrichtung der reflektierten Strahlung. Die Polarisationsrichtung des Lichts ist in der Figur durch zusätzliche Pfeilsymbole an den Ausbreitungsvektoren des Lichts angegeben. Wie üblich, wird eine zirkulare Polarisation, bei der die Kreisbewegung des elektrischen Feldstärkenvektors aus Sicht eines Beobachters, auf den die Lichtwelle zuläuft, im Uhrzeigersinn erfolgt, als rechtszirkulare Polarisation, die gegenläufige Polarisation als linkszirkulare Polarisation bezeichnet. Während die erste Flüssigkristallschicht 30 im Ausführungsbeispiel rechtszirkular polarisiertes Licht reflektiert, reflektiert die zweite Flüssigkristallschicht 32 linkzirkular polarisiertes Licht der jeweiligen Wellenlänge. Die jeweils gegenläufige Polarisationsrichtung sowie Licht mit Wellenlängen außerhalb des Bereichs selektiver Reflexion werden von den Flüssigkristallschichten ohne wesentliche Absorption durchgelassen.

Wird die Schichtenfolge 30, 32 mit weißem Licht 34, 44 bestrahlt, so ergibt sich für die transmittierte und reflektierte Strahlung folgendes Bild: Von dem senkrecht einfallenden weißen Licht 34 wird der rechtszirkular polarisierte grüne Anteil 36 von der ersten Flüssigkristallschicht 30 reflektiert, der linkszirkular polarisierte grüne Anteil sowie alle anderen Wellenlängen werden durchgelassen. Von der durchgelassenen Strahlung reflektiert dann die zweite Flüssigkristallschicht 32 den linkszirkular polarisierten grünen Anteil 38 des Lichts, und lässt Licht der anderen Wellenlängen durch. In Transmission beobachtet man somit bei senkrechter Betrachtung weißes Licht, dem der grüne Spektralanteil 40 fehlt, da beide zirkulare Polarisationsrichtungen des grünen Lichts reflektiert werden (Pfeil 42).

Für das unter einem spitzen Winkel einfallende weiße Licht 44 verschiebt sich der reflektierte Wellenlängenbereich aufgrund der physikalischen Gegebenheiten in den kürzerwelligen Bereich, im Ausführungsbeispiel von grünem zu blauem Licht. Entsprechend reflektiert die erste Flüssigkristallschicht 30 den rechtszirkular polarisierten blauen Lichtanteil 46, während der linkszirkular polarisierte blaue Anteil, sowie die anderen Wellenlängen durchgelassen werden. Die zweite Flüssigkristallschicht 32 reflektiert von der durchgelassenen Strahlung den linkszirkular polarisierten blauen Anteil 48 des Lichts, und lässt Licht der anderen Wellenlängen durch. In Transmission beobachtet man dann bei spitzwinkliger Betrachtung weißes Licht, dem der blaue Spektralanteil 50 fehlt, da das blaue Licht mit beiden Polarisationsrichtungen reflektiert wird (Pfeil 52).

Fig. 4 zeigt eine konkrete Anwendung auf Grundlage dieses Prinzips in einem erfindungsgemäßen Sicherheitselement 60. Das Sicherheitselement 60 weist eine transparente oder semitransparente Untergrundschicht 62 auf, auf der mit einer fluoreszierenden Druckfarbe eine Fluoreszenzschicht 64 aufgedruckt ist. Die Fluoreszenzschicht 64 enthält einen Fluoreszenzstoff, der nach Anregung mit UV-Strahlung 70 im blauen Spektralbereich emittiert. Auf die Fluoreszenzschicht 64 ist eine Schichtenfolge aus zwei cholesterischen Flüssigkristallschichten 66 und 68 aufgebracht, die dieselben Eigenschaften wie die oben beschriebenen Flüssigkristallschichten 30 und 32 aufweisen, also in die senkrechte Reflexionsrichtung grünes Licht, und in eine spitzwinklige Reflexionsrichtung blaues Licht jeweils gegenläufiger zirkularer Polarisation reflektieren, und zusammen ein Bandsperrfilter für grünes bzw. blaues Licht bilden.

Das von der Fluoreszenzschicht 64 her senkrecht auf die Flüssigkristallschichten 66, 68 einfallende blaue Licht wird von diesen im Wesentlichen ungehindert durchgelassen, da die Schichtenfolge 66, 68 in senkrechter Richtung, wie oben erläutert, nur grünes Licht reflektiert und die anderen Wellenlängen transmittiert. Nach UV-Anregung der Fluoreszenzschicht 64 ist somit bei senkrechter Betrachtung des Sicherheitselements 60 eine blaue Fluoreszenzstrahlung 72 erkennbar.

Eine andere Situation ergibt sich für die unter einem spitzen Winkel auf die Schichtenfolge 66, 68 einfallende blaue Fluoreszenzstrahlung. Sie wird, wie oben beschrieben, von den Flüssigkristallschichten vollständig reflektiert (Pfeil 74), so dass unter spitzem Betrachtungswinkel vom Betrachter keine Fluoreszenz beobachtet werden kann (Bezugszeichen 76). Beim Kippen des Sicherheitselements 60 aus der Senkrechten verschwindet für den Betrachter somit die blaue Fluoreszenzstrahlung 72.

Es versteht sich, dass analog auch der umgekehrte Effekt, also eine beim Kippen einsetzende Sichtbarkeit der Fluoreszenz erzeugt werden kann. Dazu genügt es, bei ansonsten unverändertem Schichtaufbau in der Fluoreszenzschicht einen Fluoreszenzstoff einzusetzen, der nicht im blauen, sondern im grünen Spektralbereich emittiert. Nach Anregung wird dann das senkrecht emittierte grüne Licht von den Flüssigkristallschichten 66, 68 vollständig reflektiert und somit in Transmission ausgeblendet, während es unter spitzem Winkel durchgelassen wird.

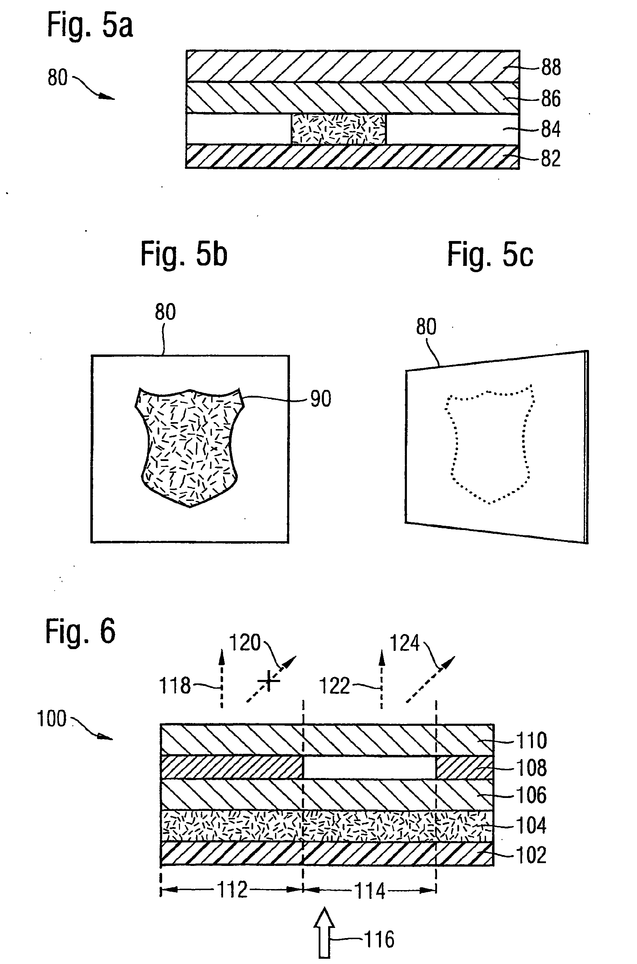

Ein weiteres Ausführungsbeispiel der Erfindung ist in Fig. 5 dargestellt. Bei dem Sicherheitselement 80 ist auf einer Untergrundschicht 82 eine blau emittierende Fluoreszenzschicht 84 aufgedruckt und auf dieser eine Schichtenfolge aus zwei cholesterischen Flüssigkristallschichten 86 und 88 aufgebracht, die wieder die gleichen lichtpolarisierenden Eigenschaften wie die Flüssigkristallschichten 30 und 32 aufweisen. Die Fluoreszenzschicht 84 ist in diesem Ausführungsbeispiel nur bereichsweise aufgebracht und liegt in Form eines Motivs, beispielsweise eines Wappens 90 vor, wie in Fig. 5(b) gezeigt.

Bei Anregung der Fluoreszenzschicht 84 mit UV-Strahlung tritt das Wappenmotiv 90 bei senkrechter Betrachtung des Sicherheitselements (Fig. 5(b)) durch die in den Motivbereichen emittierte blaue Fluoreszenzstrahlung deutlich erkennbar hervor. Beim Kippen des Sicherheitselements 80, also beim Übergang von senkrechter zu spitzwinkliger Betrachtung verschwindet das Motiv, da die blaue Fluoreszenzstrahlung in der spitzwinkligen Betrachtungsrichtung ausgeblendet wird, wie in Fig. 5(c) angedeutet.

Wie oben kann mithilfe eines grün emittierenden Fluoreszenzstoffs bei ansonsten unverändertem Schichtaufbau der umgekehrte Effekt verwirklicht werden, also ein Motiv in das Sicherheitselement eingebracht werden, das bei senkrechter Betrachtung nicht erkennbar ist und das beim Kippen des Sicherheitselements erscheint.

Soll die Anregung der Fluoreszenzschicht 84 von der Rückseite des Sicherheitselements her erfolgen, so muss die Untergrundschicht 82 transparent oder semitransparent oder zumindest im ultravioletten Spektralbereich durchlässig ausgebildet werden. Erfolgt die Anregung dagegen von der Oberseite des Sicherheitselements her, so wird zweckmäßig eine dunkle und absorbierende, insbesondere schwarze Untergrundschicht verwendet, um einen hohen Kontrast des Farbeffekts und eine gute Erkennbarkeit zu erzielen.

Ein weiteres Ausführungsbeispiel der Erfindung ist in Fig. 6 dargestellt. Das Sicherheitselement 100 enthält eine transparente oder semitransparente Untergrundschicht 102 mit einer aufgedruckten Fluoreszenzschicht 104, die einen blau emittierenden Fluoreszenzstoff aufweist. Die darauf aufgebrachte Flüssigkristall-Schichtenfolge enthält, anders als bei den zuvor beschriebenen Ausführungsbeispielen, zwei cholesterische Flüssigkristallschichten 106 und 110 mit den gleichen lichtpolarisierenden Eigenschaften, so dass die beiden Schichten für sich genommen jeweils Licht derselben zirkularen Polarisation reflektieren. Zwischen den beiden cholesterischen Flüssigkristallschichten 106 und 110 ist bereichsweise eine λ/2-Schicht 108 angeordnet, die nematische Flüssigkristalle enthält, und die durch die Form bzw. den Umriss der aufgebrachten Bereiche ein Motiv bildet.

Die Wirkung der λ/2-Schicht 108 und der zweiten cholesterischen Flüssigkristallschicht 110 zusammengenommen entspricht gerade der oben beschriebenen Wirkung der zweiten cholesterischen Flüssigkristallschicht 68 oder 88. Der von der ersten Flüssigkristallschicht 106 im Ausführungsbeispiel durchgelassene linkszirkular polarisierte Anteil des Lichts wird nämlich von der λ/2-Schicht in rechtszirkular polarisiertes Licht umgewandelt und von der zweiten Flüssigkristallschicht 110 reflektiert. Das reflektierte Licht wird von der λ/2-Schicht 108 dann wieder in linkszirkular polarisiertes Licht gewandelt und von der ersten Flüssigkristallschicht 106 transmittiert.

In dem Bereich 112, in dem zwischen den cholesterischen Flüssigkristallschichten eine λ/2-Schicht 108 vorliegt, zeigt das Sicherheitselement 100 daher dieselben Reflexions- bzw. Transmissionseigenschaften wie das in Fig. 4 beschriebene Sicherheitselement 60. Insbesondere wird die blaue Fluoreszenzstrahlung im Bereich 112 in senkrechter Richtung durchgelassen, während sie für spitzwinklige Betrachtungsrichtungen ausgeblendet wird, wie durch die Pfeile 118 und 120 angedeutet.

In den Bereichen 114 ohne λ/2-Schicht bildet die Schichtenfolge 106, 110 dagegen kein derartiges Bandsperrfilter. Zunächst wird das blaue Licht 122 in senkrechter Richtung vollständig durchgelassen, da die beiden Flüssigkristallschichten 106, 110 in dieser Richtung nur grünes Licht reflektieren. Das Sicherheitselement 100 zeigt daher bei senkrechter Betrachtung in den Bereichen 112, 114 eine weitgehend gleichförmige blaue Fluoreszenz.

Von der unter einem spitzen Winkel auf die Schichtenfolge 106,110 einfallenden Fluoreszenzstrahlung wird der rechtszirkular polarisierte blaue Lichtanteil von der ersten Flüssigkristallschicht 106 reflektiert. Der durchgelassene linkszirkular polarisierte Anteil wird auch von der zweiten Flüssigkristallschicht 110 durchgelassen, da diese dieselben lichtpolarisierenden Eigenschaften wie die erste Flüssigkristallschicht 106 aufweist. In den Bereichen 112 mit λ/2-Schicht hingegen bildet die Schichtenfolge 106, 108, 110 ein Bandsperrfilter für die blaue Fluoreszenzstrahlung. Bei spitzwinkliger Betrachtung tritt das durch die λ/2-Schicht 108 gebildete Motiv somit für den Betrachter deutlich in Erscheinung, wobei die mit der λ/2-Schicht belegten Bereiche dunkel, die freigelassenen Bereiche hell erscheinen. Insgesamt geht der gleichförmige Leuchteindruck des Sicherheitselements 100 beim Kippen aus der Senkrechten in die etwas leuchtschwächere Motivdarstellung der λ/2-Schicht über.

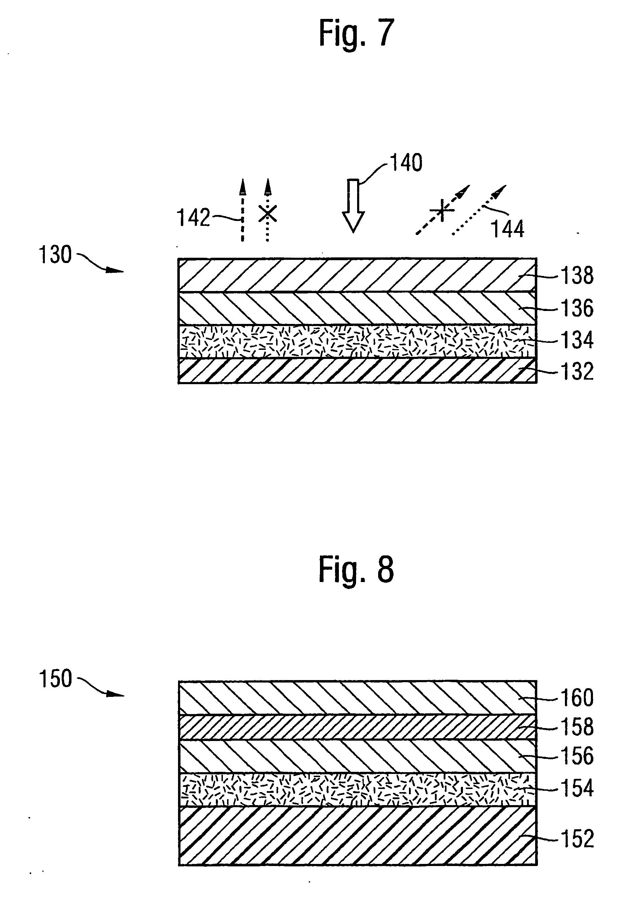

In dem weiteren Ausführungsbeispiel der Fig. 7 ist ein Sicherheitselement 130 mit umgekehrtem Farbkippeffekt illustriert. Die Bezeichnung "umgekehrt" bezieht sich dabei auf die Tatsache, dass der Farbeindruck des Sicherheitselements 130 beim Kippen aus der Senkrechten, im Gegensatz zu üblichen Farbkippelementen, vom kurzwelligen zu einem längerwelligen Farbeindruck wechselt.

Das Sicherheitselement 130 umfasst dazu eine schwarze Untergrundschicht 132, auf die eine Fluoreszenzschicht 134 mit einer Mischung aus blau und grün fluoreszierenden Farbstoffen aufgebracht ist. Es sind auch fluoreszierende Farbstoffe denkbar, die so ausgestaltet sind, dass sie Emissionsbanden sowohl im grünen als auch im blauen Spektralbereich aufweisen. Die Schichtenfolge 136 und 138 aus zwei cholesterischen Flüssigkristallschichten ist wie die Schichtenfolge 30 und 32 der Fig. 3 ausgebildet.

Werden die beiden Fluoreszenzfarbstoffe nun durch UV-Strahlung 140 angeregt, so emittieren sie blaue bzw. grüne Fluoreszenzstrahlung. Wie mit Bezug auf Fig. 3 erläutert, transmittiert die Schichtenfolge 136, 138 in die senkrechte Betrachtungsrichtung lediglich den blauen Anteil 142, in die spitzwinklige Betrachtungsrichtung lediglich den grünen Anteil 144 der Fluoreszenzemission. Der Betrachter nimmt somit beim Kippen des Sicherheitselements 130 einen Farbkippeffekt wahr, bei dem der Farbeindruck von Blau (bei senkrechter Betrachtung) nach Grün (bei spitzwinkliger Betrachtung) wechselt.

Das Ausführungsbeispiel der Fig. 8 zeigt einen Sicherheitsfaden 150, bei dem im Vergleich zu dem Ausführungsbeispiel der Fig. 7 die zweite Flüssigkristallschicht 138 durch eine Kombination aus einer λ/2-Schicht 158 und einer zur Flüssigkristallschicht 138 gegenläufig orientierten, d.h. einer zu einer ersten Flüssigkristallschicht 156 gleichläufig orientierten cholesterischen Flüssigkristallschicht 160 ersetzt ist. Auf dem schwarzen Fadenaufbau 152 ist dabei zunächst eine Fluoreszenzschicht 154 aus einer fluoreszierenden Druckfarbe aufgedruckt, im Ausführungsbeispiel einer Druckfarbe mit Emissionsbanden im grünen und blauen Spektralbereich.

Weiter wird eine PET-Folie mit einer nematischen λ/2-Schicht 158 beschichtet und diese Flüssigkristallschicht 158 mit der cholesterischen Flüssigkristallschicht 156 beschichtet. Der Fadenaufbau 152 mit der Fluoreszenzschicht 154 wird dann auf die beiden Flüssigkristallschichten 156, 158 auflaminiert und die Trägerfolie der Flüssigkristallschichten durch Trennwickeln entfernt. Auf die nunmehr oben liegende λ/2-Schicht 158 wird eine weitere cholesterische Flüssigkristallschicht 160 mit denselben lichtpolarisierenden Eigenschaften wie die erste Flüssigkristallschicht 156 auflaminiert. Auch die Trägerfolie der zweiten cholesterischen Flüssigkristallschicht 160 wird durch Trennwicklung entfernt. Anschließend wird der Sicherheitsfaden 150 heißsiegelfähig ausgestattet. Bei Bestrahlung des Sicherheitsfadens 150 mit UV-Strahlung tritt dann für den Betrachter, wie bei der Ausgestaltung der Fig. 7, ein umgekehrter Farbkippeffekt in Erscheinung.

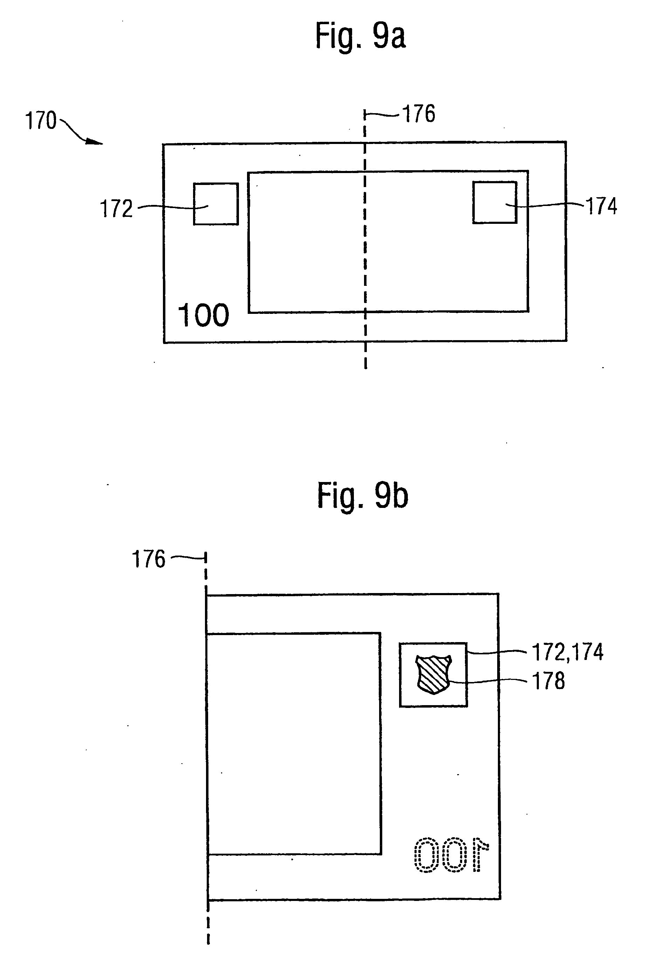

Die Prinzipien der beschriebenen Ausführungsbeispiele können auch für selbstauthentifizierende Sicherheitsanordnungen auf beliebigen Datenträgern eingesetzt werden. Fig. 9 zeigt zur Erläuterung eine Banknote 170, die mit einer zweiteiligen Sicherheitsanordnung aus einem Sicherheitselement 172 und einem Darstellungselement 174 ausgestattet ist. Das Sicherheitselement 172 und das Darstellungselement 174 sind so auf der Banknote 170 angeordnet, dass sie beim Falten der Banknote entlang der Mittelinie 176 aufeinander zu liegen kommen, wie in Fig. 9(b) dargestellt. Es versteht sich, dass eine derartige Anordnung des Sicherheitselements 172 und des Darstellungselements 174 nicht zwingend ist und dass die Elemente 172, 174 selbstverständlich auch an anderen Stellen auf der Banknote 170 angeordnet sein können, solange gewährleistet ist, dass diese beim Falten der Banknote aufeinander zu liegen kommen.

In einem Ausführungsbeispiel besteht das Sicherheitselement 172 aus einer auf eine transparente oder semitransparente Trägerfolie aufgebrachten Schichtenfolge aus cholesterischen und/oder nematischen Flüssigkristallschichten sowie einer Fluoreszenzschicht, wie in Fig. 2 dargestellt, allerdings ohne die dunkle Untergrundschicht 22. Die Schichten können vollflächig oder auch nur bereichsweise aufgebracht sein, um unterschiedliche oder sich ergänzende Motive zu bilden. Auch die Schichtenfolge als solche kann auf der Trägerfolie in Form eines Motivs vorliegen. Das Sicherheitselement 172 liegt in einem papiermacherisch hergestellten oder ausgestanzten Fenster der Banknote 170 vor und erscheint in aufgefalteter Lage der Banknote im Auflicht oder Durchlicht im Wesentlichen transparent und unauffällig.

Die dunkle Untergrundschicht, die für die Erkennbarkeit der beschriebenen Farb- oder Polarisationseffekte wesentlich ist, wird in diesem Ausführungsbeispiel durch das separate Darstellungselement 174 bereitgestellt und kann beispielsweise durch eine auf eine Seite der Banknote 170 aufgedruckte handelsübliche Druckfarbe gebildet werden. Erst wenn die Banknote wie in Fig. 9(b) gefaltet wird, so dass das Sicherheitselement 172 auf dem Darstellungselement 174 zu liegen kommt, können die vorgesehenen Farbeffekte erkannt werden. Beispielsweise kann nach dem Falten der Banknote 170 und Bestrahlen mit UV-Strahlung ein vorher nicht erkennbares fluoreszierendes Wappenmotiv 178 in Erscheinung treten, das beim Kippen der gefalteten Banknote verschwindet. Es versteht sich, dass in dem Darstellungselement 174 ebenfalls ein Motiv vorliegen kann, insbesondere zusätzlich zu dem Motiv in dem Sicherheitselement 162, wobei sich die beiden Motive gegebenenfalls ergänzen und dadurch eine Codierung bilden können.

In einem weiteren, nicht dargestellten Ausführungsbeispiel besteht das Sicherheitselement aus einer Schichtenfolge aus cholesterischen und/oder nematischen Flüssigkristallschichten sowie einer mit UV-Strahlung anregbaren Fluoreszenzschicht, wie in Fig. 2 gezeigt, die auf einer transparenten Trägerfolie aufgebracht ist. Das Sicherheitselement liegt wie das Sicherheitselement in dem in Fig. 9 gezeigten Ausführungsbeispiel in einem papiermacherisch hergestellten oder ausgestanzten Fenster einer Banknote vor. Im Unterschied dazu weist das Sicherheitselement jedoch eine zwischen der Trägerfolie und der Fluoreszenzschicht angeordnete dunkle Untergrundschicht auf, die jedoch im ultravioletten Spektralbereich durchlässig ist. Dadurch ist eine Anregung der Fluoreszenzschicht auch von der Unterseite her ohne weiteres möglich. Es versteht sich, dass die Schichten und/oder die Schichtenfolge als solche vollflächig oder auch nur bereichsweise aufgebracht sein können, um unterschiedliche oder sich ergänzende Motive zu bilden.

Selbstverständlich können das vorstehende Ausführungsbeispiel sowie die Ausführungsbeispiele zur selbstauthentifizierenden Sicherheitsanordnung auch auf einem Dokument aus Kunststoff, wie einer Kunststoffbanknote, vorgesehen werden. Hier wird das transparente Fenster vorzugsweise durch einen nicht bedruckten Bereich des Dokuments gebildet.

## Patentansprüche

1. Sicherheitselement (60) zur Absicherung von Wertgegenständen, mit
- einer ersten lichtpolarisierenden Schicht (66) aus einem cholesterischen flüssigkristallinen Material, die Licht mit einer vorbestimmten zirkularen Polarisation selektiv reflektiert, und die in eine erste Reflexionsrichtung Licht eines ersten Wellenlängenbereichs und in eine zweite, unterschiedliche Reflexionsrichtung Licht eines zweiten Wellenlängenbereichs selektiv reflektiert,
- einer zweiten lichtpolarisierenden Schicht (68), die Licht mit der zur vorbestimmten zirkularen Polarisation gegenläufigen zirkularen Polarisation selektiv reflektiert, und die in die erste bzw. zweite Reflexionsrichtung Licht des ersten bzw. zweiten Wellenlängenbereichs selektiv reflektiert, und
- einer zumindest bereichsweise vorliegenden Lumineszenzschicht (64), auf der die erste und zweite lichtpolarisierende Schicht (66, 68) übereinander angeordnet sind, wobei die Lumineszenzschicht (64) nach Anregung mit einer außerhalb des sichtbaren Spektralbereichs liegenden Anregungsstrahlung in dem ersten und/oder zweiten Wellenlängenbereich emittiert.

2. Sicherheitselement (60) nach Anspruch 1, **dadurch gekennzeichnet, dass** die zweite lichtpolarisierende Schicht (68), die Licht mit der zur vorbestimmten zirkularen Polarisation gegenläufigen zirkularen Polarisation selektiv reflektiert, aus einem cholesterischen flüssigkristallinen Material gebildet ist.

3. Sicherheitselement (60) nach Anspruch 1, **dadurch gekennzeichnet, dass** die zweite lichtpolarisierende Schicht (68) aus zwei Teilschichten gebildet ist, wobei eine erste Teilschicht aus einem cholesterischen flüssigkristallinen Material gebildet ist und Licht mit der vorbestimmten zirkularen Polarisation selektiv reflektiert, und wobei eine zweite Teilschicht, die zwischen der ersten Teilschicht und der ersten lichtpolarisierenden Schicht angeordnet ist, eine λ/2-Schicht bildet.

4. Sicherheitselement (60) nach Anspruch 3, **dadurch gekennzeichnet, dass** die λ/2-Schicht aus nematischem flüssigkristallinem Material gebildet ist.

5. Sicherheitselement (60) nach Anspruch 3 oder 4, **dadurch gekennzeichnet, dass** die λ/2-Schicht aus mehreren übereinander angeordneten und bereichsweise gegeneinander in der Schichtebene verdrehten Teilschichten gebildet ist.

6. Sicherheitselement (60) nach Anspruch 5, **dadurch gekennzeichnet, dass** die mehreren Teilschichten durch zwei λ/4-Schichten gebildet sind.

7. Sicherheitselement (60) nach wenigstens einem der Ansprüche 1 bis 6, **dadurch gekennzeichnet, dass** die erste und zweite lichtpolarisierende Schicht (66, 68) in beide Reflexionsrichtungen Licht aus dem sichtbaren Spektralbereich reflektieren.

8. Sicherheitselement (60) nach wenigstens einem der Ansprüche 1 bis 6, **dadurch gekennzeichnet, dass** die erste und zweite lichtpolarisierende Schicht (66, 68) in die erste oder zweite Reflexionsrichtung Licht aus dem nicht-sichtbaren Spektralbereich reflektieren.

9. Sicherheitselement (60) nach wenigstens einem der Ansprüche 1 bis 8, **dadurch gekennzeichnet, dass** die erste und zweite Reflexionsrichtung, bezogen auf eine Flächennormale auf die lichtpolarisierenden Schichten, durch einen Polwinkel von 20° oder mehr, vorzugsweise von 40° oder mehr, getrennt sind.

10. Sicherheitselement (60) nach wenigstens einem der Ansprüche 1 bis 9, **dadurch gekennzeichnet, dass** die erste und/oder die zweite lichtpolarisierende Schicht (66, 68) und/oder gegebenenfalls die erste und/oder zweite Teilschicht der zweiten lichtpolarisierenden Schicht in Form von Zeichen und/oder Mustern vorliegen.

11. Sicherheitselement (60) nach wenigstens einem der Ansprüche 1 bis 10, **dadurch gekennzeichnet, dass** weitere lichtpolarisierende Schichten aus nematischem oder cholesterischem flüssigkristallinem Material vorgesehen sind.

12. Sicherheitselement (60) nach wenigstens einem der Ansprüche 1 bis 11, **dadurch gekennzeichnet, dass** zumindest eine der lichtpolarisierenden Schichten aus cholesterischem flüssigkristallinem Material und/oder gegebenenfalls zumindest eine Schicht aus nematischem flüssigkristallinem Material in Form von Pigmenten vorliegt, welche in eine Bindemittelmatrix eingebettet sind.

13. Sicherheitselement (60) nach Anspruch 12, **dadurch gekennzeichnet, dass** die erste und zweite lichtpolarisierende Schicht (66, 68), die Licht gegenläufiger zirkularer Polarisation selektiv reflektieren, aus cholesterischem flüssigkristallinem Material gebildet sind und in Form von Pigmenten vorliegen, wobei eine Mischung gleicher Anteile von Pigmenten der ersten und zweiten lichtpolarisierenden Schicht in eine Bindemittelmatrix eingebettet ist, so dass die erste und zweite lichtpolarisierende Schicht als eine Schicht aufgebracht werden können.

14. Sicherheitselement (60) nach wenigstens einem der Ansprüche 1 bis 13, **dadurch gekennzeichnet, dass** die Lumineszenzschicht (64) einen oder mehrere unterschiedliche Lumineszenzstoffe aufweist.

15. Sicherheitselement (60) nach Anspruch 14, **dadurch gekennzeichnet, dass** die Lumineszenzstoffe fluoreszierende Farbstoffe oder Pigmente sind.

16. Sicherheitselement (60) nach wenigstens einem der Ansprüche 1 bis 15, **dadurch gekennzeichnet, dass** die Lumineszenzschicht (64) zwei fluoreszierende Farbstoffe oder Pigmente aufweist, die nach Anregung in dem ersten bzw. dem zweiten Wellenlängenbereich emittieren.

17. Sicherheitselement (60) nach wenigstens einem der Ansprüche 1 bis 16, **dadurch gekennzeichnet, dass** das Emissionsspektrum der Lumineszenzschicht nach Anregung mit einer außerhalb des sichtbaren Spektralbereichs liegenden Anregungsstrahlung in dem ersten und/oder dem zweiten Wellenlängenbereich ein Maximum aufweist.

18. Sicherheitselement (60) nach wenigstens einem der Ansprüche 1 bis 17, **dadurch gekennzeichnet, dass** die Lumineszenzschicht (64) einen sichtbares Licht zumindest teilweise absorbierenden Absorptionsstoff aufweist.

19. Sicherheitselement (60) nach Anspruch 18, **dadurch gekennzeichnet, dass** die Lumineszenzschicht (64) gefärbt oder pigmentiert ist.

20. Sicherheitselement (60) nach Anspruch 18 oder 19, **dadurch gekennzeichnet, dass** die Lumineszenzschicht (64) als Absorptionsstoff einen oder mehrere Farbstoffe oder Pigmente enthält.

21. Sicherheitselement (60) nach Anspruch 20, **dadurch gekennzeichnet, dass** die Lumineszenzschicht (64) als Absorptionsstoff Rußpartikel enthält.

22. Sicherheitselement (60) nach wenigstens einem der Ansprüche 1 bis 21, **dadurch gekennzeichnet, dass** die lichtpolarisierenden Schichten (66, 68) und die Lumineszenzschicht (64) auf einer transparenten, Semitransparenten oder zumindest teilweise dunklen, insbesondere schwarzen Untergrundschicht angeordnet sind.

23. Sicherheitselement (60) nach Anspruch 22, **dadurch gekennzeichnet, dass** die Untergrundschicht in Form von Zeichen und/oder Mustern vorliegt.

24. Sicherheitselement (60) nach Anspruch 22 oder 23, **dadurch gekennzeichnet, dass** die semitransparente Untergrundschicht aus einer mit Pigmenten, insbesondere mit Rußpigmenten, versetzten oder einer mit Farbstoffen eingefärbten Lackschicht gebildet ist.

25. Sicherheitselement (60) nach Anspruch 22 oder 23, **dadurch gekennzeichnet, dass** die dunkle, insbesondere schwarze Untergrundschicht gedruckt, durch Einfärben eines Substrats oder durch Einwirkung eines Laserstrahls auf ein Substrat erzeugt ist.

26. Sicherheitselement (60) nach wenigstens einem der Ansprüche 1 bis 25, **dadurch gekennzeichnet, dass** die lichtpolarisierenden Schichten (66,68), die Lumineszenzschicht (64) und gegebenenfalls die dunkle Untergrundschicht auf einem Substrat vorliegen.

27. Sicherheitselement (60) nach Anspruch 26, **dadurch gekennzeichnet, dass** das Substrat aus Papier oder Kunststoff gebildet ist.

28. Sicherheitselement (60) nach wenigstens einem der Ansprüche 1 bis 27, **dadurch gekennzeichnet, dass** zwischen den lichtpolarisierenden Schichten (66, 68), der Lumineszenzschicht (64) und gegebenenfalls der dunklen Untergrundschicht zur Ausrichtung von flüssigkristallinen Schichten bestimmte Alignmentschichten und/oder Klebeschichten vorliegen.

29. Sicherheitselement (60) nach wenigstens einem der Ansprüche 1 bis 28, **dadurch gekennzeichnet dass** das Sicherheitselement einen Sicherheitsfaden, ein Etikett oder ein Transferelement bildet.

30. Verfahren zum Herstellen eines Sicherheitselements (60) nach wenigstens einem der Ansprüche 1 bis 29, bei dem auf einer Lumineszenzschicht (64) übereinander eine erste lichtpolarisierende Schicht (66) aus einem cholesterischen flüssigkristallinen Material und eine zweite lichtpolarisierende Schicht (68), die zumindest eine (Teil-)Schicht aus einem cholesterischen flüssigkristallinen Material enthält, angeordnet werden.

31. Verfahren nach Anspruch 30, **dadurch gekennzeichnet, dass** eine oder mehrere der Flüssigkristallschichten auf eine Trägerfolie aufgebracht, insbesondere aufgedruckt werden.

32. Verfahren nach Anspruch 31, **dadurch gekennzeichnet, dass** die Flüssigkristallschichten nach dem Aufbringen auf die Trägerfolie auf Eignung zur Weiterverarbeitung geprüft werden.

33. Verfahren nach Anspruch 31 oder 32, **dadurch gekennzeichnet, dass** zwei oder mehr Flüssigkristallschichten übereinander auf derselben Trägerfolie aufgebracht werden.

34. Verfahren nach wenigstens einem der Ansprüche 31 bis 33, **dadurch gekennzeichnet, dass** die auf einer Trägerfolie vorliegenden Flüssigkristallschichten auf die Lumineszenzschicht oder eine weitere Flüssigkristallschicht auflaminiert werden.

35. Verfahren nach Anspruch 34, **dadurch gekennzeichnet, dass** die Trägerfolie nach dem Auflaminieren entfernt wird, insbesondere über Trennschichten oder durch Verwendung eines Laminierklebstoffes, dessen Haftung zur Trägerfolie geringer ist als seine Haftung zur Flüssigkristallschicht, oder über eine Hilfsschicht, die auf die Flüssigkristallschicht vollflächig aufgebracht ist und deren Haftung zur Trägerfolie geringer ist als ihre Haftung zur Flüssigkristallschicht.

36. Verfahren nach Anspruch 35, **dadurch gekennzeichnet, dass** die Hilfsschicht durch eine UV-Lackschicht gebildet wird.

37. Verfahren nach wenigstens einem der Ansprüche 30 bis 36, **dadurch gekennzeichnet, dass** die Lumineszenzschicht (64) auf eine transparente, semi-transparente oder zumindest teilweise dunkle, insbesondere schwarze Untergrundschicht aufgebracht, insbesondere mit einer fluoreszierenden Druckfarbe aufgedruckt wird.

38. Verfahren nach wenigstens einem der Ansprüche 30 bis 37, **dadurch gekennzeichnet, dass** die cholesterischen Flüssigkristallschichten durch Kombination eines nematischen Flüssigkristallsystems mit einem Verdriller gebildet werden.

39. Verfahren nach Anspruch 38, **dadurch gekennzeichnet, dass** eine erste und eine zweite, Licht gegenläufiger zirkularer Polarisationsrichtung reflektierende, cholesterische Flüssigkristallschicht durch Kombination eines nematischen Flüssigkristallsystems mit aufeinander abgestimmten ersten und zweiten Verdrillern gebildet werden, so dass sich die Flüssigkristalle der ersten und zweiten Schicht in zueinander spiegelbildlichen Helixstrukturen anordnen.

40. Verfahren nach wenigstens einem der Ansprüche 30 bis 38, **dadurch gekennzeichnet, dass** die λ/2-Teilschicht der zweiten lichtpolarisierenden Schicht aus nematischem flüssigkristallinem Material gebildet wird.

41. Sicherheitsanordnung für Sicherheitspapiere, Wertgegenstände und dergleichen mit
- einem Sicherheitselement (60) nach wenigstens einem der Ansprüche 1 bis 29 oder einem nach wenigstens einem der Ansprüche 30 bis 40 herstellbaren Sicherheitselement (60), und
- einem separaten Darstellungselement, das in Zusammenwirkung mit dem Sicherheitselement (60) einen Farbkippeffekt für den Betrachter erkennbar macht.

42. Sicherheitsanordnung nach Anspruch 41, **dadurch gekennzeichnet, dass** das Sicherheitselemen (60) keine, eine transparente oder eine semitransparente Untergrundschicht aufweist und das Darstellungselement einen dunklen, vorzugsweise schwarzen Untergrund umfasst.

43. Wertgegenstand, wie Markenartikel, Wertdokument oder dergleichen, mit einem Sicherheitselement (60) nach wenigstens einem der Ansprüche 1 bis 29 oder einem nach wenigstens einem der Ansprüche 30 bis 40 herstellbaren Sicherheitselement (60).

44. Wertgegenstand, wie Markenartikel, Wertdokument oder dergleichen, mit einer Sicherheitsanordnung nach Anspruch 41 oder 42.

45. Wertgegenstand nach Anspruch 43 oder 44, **dadurch gekennzeichnet, dass** das Sicherheitselement (60) in einem Fensterbereich des Wertgegenstands angeordnet ist.

46. Wertgegenstand nach Anspruch 44, **dadurch gekennzeichnet, dass** der Wertgegenstand flexibel ist, so dass das Sicherheitselement (60) und das Darstellungselement durch Biegen oder Falten des Wertgegenstands zur Selbstauthentifizierung übereinander legbar sind.

47. Wertgegenstand nach wenigstens einem der Ansprüche 43 bis 46, **dadurch gekennzeichnet, dass** der Wertgegenstand ein Sicherheitspapier, ein Wertdokument oder eine Produktverpackung ist.

48. Verfahren zur Echtheitsprüfung eines Sicherheitselements (60) nach einem der Ansprüche 1 bis 40, einer Sicherheitsanordnung nach Anspruch 41 oder 42 oder eines Wertgegenstands nach einem der Ansprüche 43 bis 47, **dadurch gekennzeichnet, dass** die Lumineszenzschicht (64) mit Anregungsstrahlung außerhalb des sichtbaren Spektralbereichs beaufschlagt wird, das Vorliegen eines vorbestimmten Farbkippeffekts geprüft wird, und die Echtheit des geprüften Elements auf Grundlage des Prüfungsergebnisses beurteilt wird.

## Claims

1. A security element (60) for securing valuable articles, having
- a first light-polarizing layer (66), composed of a cholesteric liquid crystal material, that selectively reflects light having a predetermined circular polarization, and that selectively reflects light of a first wavelength range in a first reflection direction and light of a second wavelength range in a second, different reflection direction,
- a second light-polarizing layer (68) that selectively reflects light having the opposite circular polarization to the predetermined circular polarization, and that selectively reflects light of the first and second wavelength range in the first and second reflection direction, respectively, and
- a luminescent layer (64) that is present at least in some areas, on which the first and second light-polarizing layer (66, 68) are stacked, the luminescent layer (64) emitting in the first and/or second wavelength range after excitation with an excitation radiation that lies outside of the visible spectral range.

2. The security element (60) according to claim 1, **characterized in that** the second light-polarizing layer (68), which selectively reflects light having the opposite circular polarization to the predetermined circular polarization, is formed from a cholesteric liquid crystal material.

3. The security element (60) according to claim 1, **characterized in that** the second light-polarizing layer (68) is formed from two sub-layers, a first sub-layer being formed from a cholesteric liquid crystal material and selectively reflecting light having the predetermined circular polarization, and a second sub-layer disposed between the first sub-layer and the first light-polarizing layer forming a λ/2 layer.

4. The security element (60) according to claim 3, **characterized in that** the λ/2 layer is formed from nematic liquid crystal material.

5. The security element (60) according to claim 3 or 4, **characterized in that** the λ/2 layer is formed from multiple sub-layers that are stacked and, in some areas, twisted toward one another in the layer plane.

6. The security element (60) according to claim 5, **characterized in that** the multiple sub-layers are formed by two λ/4 layers.

7. The security element (60) according to at least one of claims 1 to 6, **characterized in that** the first and second light-polarizing layer (66, 68) reflect light from the visible spectral range in both reflection directions.

8. The security element (60) according to at least one of claims 1 to 6, **characterized in that** the first and second light-polarizing layer (66, 68) reflect light from the non-visible spectral range in the first or second reflection direction.

9. The security element (60) according to at least one of claims 1 to 8, **characterized in that**, with respect to a surface normal to the light-polarizing layers, the first and second reflection direction are separated by a polar angle of 20° or more, preferably of 40° or more.

10. The security element (60) according to at least one of claims 1 to 9, **characterized in that** the first and/or the second light-polarizing layer (66, 68) and/or, if applicable, the first and/or second sub-layer of the second light-polarizing layer is present in the form of characters and/or patterns.

11. The security element (60) according to at least one of claims 1 to 10, **characterized in that** further light-polarizing layers composed of nematic or cholesteric liquid crystal material are provided.

12. The security element (60) according to at least one of claims 1 to 11, **characterized in that** at least one of the light-polarizing layers composed of cholesteric liquid crystal material and/or, if applicable, at least one layer composed of nematic liquid crystal material is present in the form of pigments that are embedded in a binder matrix.

13. The security element (60) according to claim 12, **characterized in that** the first and second light-polarizing layer (66, 68), which selectively reflect light of opposing circular polarization, are formed from cholesteric liquid crystal material and are present in the form of pigments, a mixture of equal parts of pigments of the first and second light-polarizing layer being embedded in a binder matrix such that the first and second light-polarizing layer can be applied as one layer.

14. The security element (60) according to at least one of claims 1 to 13, **characterized in that** the luminescent layer (64) exhibits one or more different luminescent substances.

15. The security element (60) according to claim 14, **characterized in that** the luminescent substances are fluorescent dyes or pigments.

16. The security element (60) according to at least one of claims 1 to 15, **characterized in that** the luminescent layer (64) exhibits two fluorescent dyes or pigments that emit in the first or the second wavelength range after excitation.

17. The security element (60) according to at least one of claims 1 to 16, **characterized in that** the emission spectrum of the luminescent layer exhibits a maximum in the first and/ or the second wavelength range after excitation with an excitation radiation that lies outside of the visible spectral range.

18. The security element (60) according to at least one of claims 1 to 17, **characterized in that** the luminescent layer (64) exhibits an absorbent substance that at least partially absorbs visible light.

19. The security element (60) according to claim 18, **characterized in that** the luminescent layer (64) is colored or pigmented.

20. The security element (60) according to claim 18 or 19, **characterized in that** the luminescent layer (64) includes one or more dyes or pigments as the absorbent substance.

21. The security element (60) according to claim 20, **characterized in that** the luminescent layer (64) includes soot particles as the absorbent substance.

22. The security element (60) according to at least one of claims 1 to 21, **characterized in that** the light-polarizing layers (66, 68) and the luminescent layer (64) are disposed on a transparent, semitransparent or at least partially dark, especially black, background layer.

23. The security element (60) according to claim 22, **characterized in that** the background layer is present in the form of characters and/or patterns.

24. The security element (60) according to claim 22 or 23, **characterized in that** the semitransparent background layer is formed from a lacquer layer to which pigments, especially soot pigments, have been added, or that is colored with dyes.

25. The security element (60) according to claim 22 or 23, **characterized in that** the dark, especially black, background layer is printed or produced by coloring a substrate or by the action of a laser beam on a substrate.

26. The security element (60) according to at least one of claims 1 to 25, **characterized in that** the light-polarizing layers (66, 68), the luminescent layer (64) and, if applicable, the dark background layer are present on a substrate.

27. The security element (60) according to claim 26, **characterized in that** the substrate is formed from paper or plastic.

28. The security element (60) according to at least one of claims 1 to 27, **characterized in that** alignment layers and/or adhesive layers designed to align liquid crystal layers are present between the light-polarizing layers (66, 68), the luminescent layer (64) and, if applicable, the dark background layer.

29. The security element (60) according to at least one of claims 1 to 28, **characterized in that** the security element forms a security thread, a label or a transfer element.

30. A method for manufacturing a security element (60) according to at least one of claims 1 to 29, in which a first light-polarizing layer (66) composed of a cholesteric liquid crystal material and a second light-polarizing layer (68) that includes at least one (sub-)layer composed of a cholesteric liquid crystal material are stacked on a luminescent layer (64).

31. The method according to claim 30, **characterized in that** one or more of the liquid crystal layers are applied to, especially imprinted on, a substrate foil.

32. The method according to claim 31, **characterized in that**, following the application to the substrate foil, the liquid crystal layers are checked for suitability for further processing.

33. The method according to claim 31 or 32, **characterized in that** two or more liquid crystal layers are applied stacked on the same substrate foil.

34. The method according to at least one of claims 31 to 33, **characterized in that** the liquid crystal layers present on a substrate foil are laminated onto the luminescent layer or a further liquid crystal layer.

35. The method according to claim 34, **characterized in that**, following lamination, the substrate foil is removed, especially via separation layers or by using a laminating adhesive whose adhesion to the substrate foil is less than its adhesion to the liquid crystal layer, or via an auxiliary layer that is applied contiguously to the liquid crystal layer and whose adhesion to the substrate foil is less than its adhesion to the liquid crystal layer.

36. The method according to claim 35, **characterized in that** the auxiliary layer is formed by a UV lacquer layer.

37. The method according to at least one of claims 30 to 36, **characterized in that** the luminescent layer (64) is applied to a transparent, semitransparent or at least partially dark, especially black, background layer, especially is imprinted with a fluorescent printing ink.

38. The method according to at least one of claims 30 to 37, **characterized in that** the cholesteric liquid crystal layers are formed by combining a nematic liquid crystal system with a twister.

39. The method according to claim 38, **characterized in that** a first and a second cholesteric liquid crystal layer reflecting light of opposing circular polarization direction are formed by combining a nematic liquid crystal system with coordinated first and second twisters such that the liquid crystals of the first and second layer arrange themselves into mirror-image helix structures.

40. The method according to at least one of claims 30 to 38, **characterized in that** the λ/2 sub-layer of the second light-polarizing layer is formed from nematic liquid crystal material.

41. A security arrangement for security papers, valuable articles and the like, having
- a security element (60) according to at least one of claims 1 to 29 or a security element (60) manufacturable according to at least one of claims 30 to 40, and
- a separate display element that, in coaction with the security element (60), makes a color shift effect perceptible for the viewer.

42. The security arrangement according to claim 41, **characterized in that** the security element (60) exhibits no, a transparent or a semitransparent background layer and the display element comprises a dark, preferably black, background.

43. A valuable article, such as a branded article, value document or the like, having a security element (60) according to at least one of claims 1 to 29 or a security element (60) manufacturable according to at least one of claims 30 to 40.

44. A valuable article, such as a branded article, value document or the like, having a security arrangement according to claim 41 or 42.

45. The valuable article according to claim 43 or 44, **characterized in that** the security element (60) is disposed in a window area of the valuable article.

46. The valuable article according to claim 43 or 44, **characterized in that** the valuable article is flexible such that, for self-authentication, the security element (60) and the display element are layable one on top of another by bending or folding the valuable article.

47. The valuable article according to at least one of claims 43 to 46, **characterized in that** the valuable article is a security paper, a value document or a product packaging.

48. A method for checking the authenticity of a security element (60) according to one of claims 1 to 40, a security arrangement according to claim 41 or 42 or a valuable article according to one of claims 43 to 47, **characterized in that** the luminescent layer (64) is impinged on with excitation radiation lying outside of the visible spectral range, it is checked whether a predetermined color-shift effect is present, and the authenticity of the checked element is assessed on the basis of the check result.

## Revendications

1. Elément de sécurité (60) pour la sécurité d'objets de valeur comprenant :
- une première couche polarisante optique (66) faite d'une matière à cristaux liquides cholestérique, qui réfléchit sélectivement la lumière avec une polarisation circulaire prédéterminée, et qui réfléchit sélectivement la lumière d'un premier domaine de longueur d'onde dans une première direction de réflexion et la lumière d'un deuxième domaine de longueur d'onde dans une deuxième direction de réflexion, différente,
- une deuxième couche polarisante optique (68) qui réfléchit sélectivement la lumière avec la polarisation circulaire inverse de la polarisation circulaire prédéterminée et qui réfléchit respectivement la lumière du premier domaine de longueur d'onde et du deuxième domaine de longueur d'onde, l'une dans la première et l'autre dans la deuxième direction de réflexion, et
- une couche luminescente présente au moins par endroits (64), sur laquelle les première et deuxième couches polarisantes optiques (66, 68) sont disposées l'une au-dessus de l'autre, la couche luminescente (64) émettant dans le premier et/ou le deuxième domaine de longueur d'onde après excitation par un rayonnement excitateur situé en dehors du domaine spectral visible.

2. Elément de sécurité (60) selon la revendication 1, **caractérisé en ce que** la deuxième couche polarisante optique (68) qui réfléchit sélectivement la lumière avec la polarisation circulaire inverse de la polarisation circulaire prédéterminée est formée d'une matière à cristaux liquides cholestérique.

3. Elément de sécurité (60) selon la revendication 1, **caractérisé en ce que** la deuxième couche polarisante optique (68) est formée de deux couches partielles, une première couche partielle étant formée d'une matière à cristaux liquides cholestérique et qui réfléchit sélectivement la lumière avec la polarisation circulaire prédéterminée, et une deuxième couche partielle qui est disposée entre la première couche partielle et la première couche polarisante optique, forme une couche λ/2.

4. Elément de sécurité (60) selon la revendication 3, **caractérisé en ce que** la couche λ/2 est formée d'une couche de cristaux liquides nématique.

5. Elément de sécurité (60) selon la revendication 3 ou 4, **caractérisé en ce que** la couche λ/2 est formée de plusieurs couches partielles disposées l'une au-dessus de l'autre et orientées par endroits l'une en sens inverse de l'autre dans le plan de la couche.

6. Elément de sécurité (60) selon la revendication 5, **caractérisé en ce que** les plusieurs couches partielles sont formées de deux couches λ/4.

7. Elément de sécurité (60) selon au moins une des revendications 1 à 6,
**caractérisé en ce que** les première et deuxième couches polarisantes optiques (66, 68) réfléchissent dans les deux directions de réflexion la lumière située en dehors du domaine spectral visible.

8. Elément de sécurité (60) selon au moins une des revendications 1 à 6,
**caractérisé en ce que** les première et deuxième couches polarisantes optiques (66, 68) réfléchissent dans la première ou la deuxième direction de réflexion la lumière située en dehors du domaine spectral non visible.

9. Elément de sécurité (60) selon au moins une des revendications 1 à 8,
**caractérisé en ce que**, rapportées à une normale à la surface des couches polarisantes optiques, les première et deuxième directions de réflexion sont séparées par un angle polaire de 20 ° ou plus, de préférence de 40 ° ou plus.

10. Elément de sécurité (60) selon au moins une des revendications 1 à 9,
**caractérisé en ce que** les première et/ou deuxième couches polarisantes optiques (66, 68) et/ou éventuellement les première et/ou deuxième couches partielles de la deuxième couche polarisante optique se présentent sous la forme de caractères et/ou de dessins.

11. Elément de sécurité (60) selon au moins une des revendications 1 à 10,
**caractérisé en ce qu'**il est prévu des couches polarisantes optiques additionnelles faites d'une matière à cristaux liquides nématique ou cholestérique.

12. Elément de sécurité (60) selon au moins une des revendications 1 à 11,
**caractérisé en ce qu'**au moins une des couches polarisantes optiques faites de matière à cristaux liquides cholestérique et/ou éventuellement au moins une couche faite de matière à cristaux liquides nématique se présentent sous la forme de pigments qui sont noyés dans une matrice de liant.

13. Elément de sécurité (60) selon la revendication 12, **caractérisé en ce que** les première et deuxième couches polarisantes optiques (66, 68) qui réfléchissent sélectivement avec des polarisations circulaires inverses l'une de l'autre sont formées de matière à cristaux liquides cholestérique et se présentent sous la forme de pigments, auquel cas un mélange de parties égales de pigments des première et deuxième couches polarisantes optiques est noyé dans une matrice de liant, de sorte que les première et deuxième couches polarisantes optiques peuvent être déposées sous la forme d'une seule couche.

14. Elément de sécurité (60) selon au moins une des revendications 1 à 13,
**caractérisé en ce que** la couche luminescente (64) présente une ou plusieurs substances luminescentes différentes.

15. Elément de sécurité (60) selon la revendication 14, **caractérisé en ce que** les substances luminescentes sont des colorants ou pigments fluorescents.

16. Elément de sécurité (60) selon au moins une des revendications 1 à 15,
**caractérisé en ce que** la couche luminescente (64) présente deux colorants ou pigments fluorescents qui, après excitation, émettent respectivement dans le premier et dans le deuxième domaine de longueur d'onde.

17. Elément de sécurité (60) selon au moins une des revendications 1 à 16,
**caractérisé en ce que** le spectre d'émission de la couche luminescente après excitation par un rayonnement excitateur qui se trouve en dehors du domaine spectral visible présente un maximum dans le premier et/ou dans le deuxième domaine de longueur d'onde.

18. Elément de sécurité (60) selon au moins une des revendications 1 à 17.
**caractérisé en ce que** la couche luminescente (64) présente une substance absorbante qui absorbe au moins partiellement la lumière visible.

19. Elément de sécurité (60) selon la revendication 18, **caractérisé en ce que** la couche luminescente (64) est colorée ou pigmentée.

20. Elément de sécurité (60) selon la revendication 18 ou 19, **caractérisé en ce que** la couche luminescente (64) contient comme substance absorbante un ou plusieurs colorants ou pigments.

21. Elément de sécurité (60) selon la revendication 20, **caractérisé en ce que** la couche luminescente (64) renferme des particules de noir de carbone en tant que substance absorbante.

22. Elément de sécurité (60) selon au moins une des revendications 1 à 21,
**caractérisé en ce que** les couches polarisantes optiques (66, 68) et la couche luminescente (64) sont disposées sur une couche de fond transparente, semi-transparente, ou au moins partiellement foncée, en particulier noire.

23. Elément de sécurité (60) selon la revendication 22, **caractérisé en ce que** la couche de fond se présente sous la forme de caractères et/ou de dessins.

24. Elément de sécurité (60) selon la revendication 22 ou 23, **caractérisé en ce que** la couche de fond semi-transparente est formée d'une couche de laque mélangée à des pigments, en particulier par des pigments de noir de carbone, ou d'une couche de laque colorée avec des colorants.

25. Elément de sécurité (60) selon la revendication 22 ou 23, **caractérisé en ce que** la couche de fond foncée, en particulier noire, est imprimée, produite par coloration d'un substrat ou par l'action d'un rayon laser sur un substrat.

26. Elément de sécurité (60) selon au moins une des revendications 1 à 25,
**caractérisé en ce que** les couches polarisantes optiques (66, 68), la couche luminescente (64) et éventuellement la couche de fond foncée sont présentes sur un substrat.

27. Elément de sécurité (60) selon la revendication 26, **caractérisé en ce que** le substrat est formé de papier ou de matière plastique.

28. Elément de sécurité (60) selon au moins une des revendications 1 à 27,
**caractérisé en ce que**, entre les couches polarisantes optiques (66, 68), la couche luminescente (64) et éventuellement la couche de fond foncée, se trouvent des couches d'alignement destinées à l'orientation de couches de cristaux liquides et/ou des couches de colle.

29. Elément de sécurité (60) selon au moins une des revendications 1 à 28,
**caractérisé en ce que** l'élément de sécurité forme un fil de sécurité, une étiquette ou un élément de transfert.

30. Procédé pour fabriquer un élément de sécurité (60) selon au moins une des revendications 1 à 29, dans lequel on dispose l'une au-dessus de l'autre sur une couche luminescente (64) une première couche polarisante optique (66) faite d'une matière à cristaux liquides cholestérique et une deuxième couche polarisante optique (68) qui contient au moins une couche (partielle) faite d'une matière à cristaux liquides cholestérique.

31. Procédé selon la revendication 30, **caractérisé en ce qu'**une ou plusieurs des couches de cristaux liquides est ou sont déposée(s), en particulier imprimée(s), sur une feuille de support.

32. Procédé selon la revendication 31, **caractérisé en ce que** les couches de cristaux liquides sont soumises après leur dépôt sur la feuille de support, à un essai pour la vérification de leur aptitude au traitement suivant.

33. Procédé selon la revendication 31 ou 32, **caractérisé en ce que** deux ou plus de deux couches de cristaux liquides sont appliquées l'une au-dessus de l'autre sur la même feuille de support.

34. Procédé selon au moins une des revendications 31 à 33, **caractérisé en ce que** les couches de cristaux liquides présentes sur une feuille de support sont stratifiées sur la couche luminescente ou sur une autre couche de cristaux liquides.

35. Procédé selon la revendication 34, **caractérisé en ce que** la feuille de support est enlevée après la stratification, en particulier à l'aide de couches séparatrices, ou grâce à l'utilisation d'une colle de stratification dont l'adhérence à la feuille de support est plus faible que son adhérence à la couche de cristaux liquide, ou à l'aide d'une couche auxiliaire qui est appliquée par sa surface totale sur la couche de cristaux liquides et dont l'adhérence à la feuille de support est plus faible que son adhérence à la couche de cristaux liquides.

36. Procédé selon la revendication 35, **caractérisé en ce que** la couche auxiliaire est formée d'une couche de laque UV.

37. Procédé selon au moins une des revendications 30 à 36, **caractérisé en ce que** la couche luminescente (64) est déposée, en particulier imprimée avec une encre d'imprimerie fluorescente, sur une couche de fond transparente, semi-transparente ou au moins partiellement foncée, en particulier noire.

38. Procédé selon au moins une des revendications 30 à 37, **caractérisé en ce que** les couches de cristaux liquides cholestériques sont formées par combinaison d'un système à cristaux liquides nématiques avec un rotateur.

39. Procédé selon la revendication 38, **caractérisé en ce qu'**une première et une deuxième couches de cristaux liquides cholestériques qui réfléchissent la lumière dans des directions de polarisation circulaire inverse l'une de l'autre sont formées par combinaison d'un système de cristaux liquides nématique possédant des premier et deuxième rotateurs adaptés l'un à l'autre, de manière que les cristaux liquides des première et deuxième couches se disposent en structures hélicoïdales symétriques l'une de l'autre comme un objet et son image dans un miroir.

40. Procédé selon au moins une des revendications 30 à 38, **caractérisé en ce que** la couche partielle λ/2 de la deuxième couche polarisante optique est formée d'une matière à cristaux liquides nématique.

41. Dispositif de sécurité pour documents de sécurité, objets de valeur et analogues, comprenant
- un premier élément de sécurité (60) selon au moins une des revendications 1 à 29, ou un élément de sécurité (60) pouvant être fabriqué selon au moins une des revendications 30 à 40, et
- un élément de présentation séparé qui, en coopération avec l'élément de sécurité (60), rend visible pour l'observateur un effet d'inversion de couleur.

42. Dispositif de sécurité selon la revendication 41, **caractérisé en ce que** l'élément de sécurité (60) ne présente pas de couche de fond ou présente une couche de fond transparente ou une couche de fond semi-transparente et l'élément de présentation comprend un fond foncé, de préférence noir.

43. Objet de valeur tel qu'un article de marque, un document de valeur ou analogue, muni d'un élément de sécurité (60) selon une des revendications 1 à 29 ou d'un élément de sécurité pouvant être fabriqué selon au moins une des revendications 30 à 40.

44. Objet de valeur tel qu'un article de marque, document de valeur ou analogue, muni d'un dispositif de sécurité selon la revendication 41 ou 42.

45. Objet de valeur selon la revendication 43 ou 44, **caractérisé en ce que** l'élément de sécurité (60) est disposé dans une région de fenêtre de l'objet de valeur.

46. Objet de valeur selon la revendication 44, **caractérisé en ce que** l'objet de valeur est souple, de sorte que l'élément de sécurité (60) et l'élément de présentation peuvent être placés l'un au-dessus de l'autre par pliage ou repliage de l'objet de valeur pour son auto-authentification.

47. Objet de valeur selon au moins une des revendications 43 à 46, **caractérisé en ce que** l'objet de valeur est un document de sécurité, un document de valeur ou un emballage de produit.

48. Procédé pour la vérification de l'authenticité d'un élément de sécurité (60) selon une des revendications 1 à 40, d'un dispositif de sécurité selon la revendication 41 ou 42 ou d'un objet de valeur selon une des revendications 42 à 47, **caractérisé en ce que** la couche luminescente (64) est soumise à un rayonnement excitateur situé en dehors du domaine spectral visible, on vérifie la présence d'un effet d'inversion chromatique prédéterminé et on juge de l'authenticité de l'élément examiné en se basant sur le résultat de la vérification.
